# EUROPÄISCHE PATENTSCHRIFT

(11) **EP 2 824 288 B1**
(45) Veröffentlichungstag und Bekanntmachung des Hinweises auf die Patenterteilung: **11.04.2018**
(21) Anmeldenummer: 14175831.8
(22) Anmeldetag: 04.07.2014
(51) Int. Cl.: F01D 5/14, F02C 7/06, F04D 13/02, F04D 29/04, F04D 29/22, F01D 25/16, F02C 7/268

(54) **Flugtriebwerk**
Gas turbine engine
Moteur à turbine

(30) Priorität: 10.07.2013 DE 102013213517
(43) Veröffentlichungstag der Anmeldung: 14.01.2015
(73) Patentinhaber: Rolls-Royce Deutschland Ltd & Co KG, 15827 Blankenfelde-Mahlow (DE)
(72) Erfinder: Burghardt, Sascha, 15370 Vogelsdorf (DE)
(74) Vertreter: Maikowski & Ninnemann Patentanwälte Partnerschaft mbB

(56) Entgegenhaltungen:
- EP-A2- 1 357 295
- EP-A2- 2 535 528
- DE-A1-102010 049 885

## Beschreibung

Die Erfindung betrifft ein Flugtriebwerk gemäß dem Oberbegriff des Patentanspruchs 1. Es ist bekannt, einen Fan eines Flugtriebwerkes unmittelbar durch eine zentrale, auf der Achse des Flugtriebwerks angeordnete Niederdruckwelle anzutreiben, die den Fan mit einer Niederdruckturbine des Flugtriebwerks koppelt. Ein Untersetzungsgetriebe zwischen Fan und Niederdruckturbine ist dabei nicht vorgesehen.
Zur Lagerung der Niederdruckwelle werden in Lagerkammern angeordnete Wälzlager eingesetzt. Da im Bereich des Fans in einem zu einer Rotorunwucht führenden Fehlerfall (z. B. bei Verlust oder Beschädigung einer Fanschaufel durch Vogelschlag) enorme Kräfte auftreten, die sich auf das Wellensystem in Form von Biegung übertragen, ist es beispielsweise aus der Figur 1 der US 2011/0047959 A1 bekannt, zwei vordere Lager zur Lagerung der Niederdruckwelle vorzusehen, die solche auf die Niederdruckwelle wirkenden Biegungskräfte aufnehmen. Aufgrund der potentiell hohen Belastungskräfte sind solche Lager sehr stark und mit hohem Gewicht auszubilden.

Die DE 10 2010 049885 A1 beschreibt ein Triebwerk, bei dem zusätzlich zu einem ersten vorderen Lager einer Niederdruckwelle eine weitere Lageranordnung vorgesehen ist, die sich in dem Zylindervolumen befindet, das sich zwischen der Nabe des Fans und der Niederdruckwelle erstreckt. Die weitere Lageranordnung dient der Lagerung eines Stators an einer Motor-Generator-Einheit, die im Nasenkonus angeordnet ist und der Erzeugung der an Bord des Luftfahrzeugs benötigten Energie dient.

Der vorliegenden Erfindung liegt die Aufgabe zugrunde, eine einen Fan eines Flugtriebwerks antreibende Niederdruckwelle derart zu lagern, dass im Fehlerfall durch eine Unwucht des Fans entstehende Belastungskräfte sicher aufgenommen werden können.

Diese Aufgabe wird erfindungsgemäß durch ein Flugtriebwerk mit den Merkmalen des Anspruchs 1 gelöst. Ausgestaltungen der Erfindung sind in den Unteransprüchen angegeben.

Danach beruht die erfindungsgemäße Lösung auf dem Gedanken, das vorderste Lager der Niederdruckwelle in derselben senkrecht zur Längsachse des Flugtriebwerks verlaufenden Ebene anzuordnen, in der sich auch der Massenschwerpunkt des Fans befindet, so dass mindestens ein Lagerelement des ersten vorderen Lagers (4) von der genannten Ebene (9) geschnitten wird. Im Vergleich zum Stand der Technik ist das vorderste Lager der Niederdruckwelle damit weiter nach vorne geschoben, bis es sich in der gleichen axialen Ebene wie der Massenschwerpunkt des Fans befindet. Mit anderen Worten ausgedrückt liegt das vorderste Lager der Niederdruckwelle in der durch den Fan aufgespannten, senkrecht zur Längsachse des Flugtriebwerks verlaufenden Ebene, in der auch der Massenschwerpunkt des Fans liegt.

Die erfindungsgemäße Lösung bewirkt, dass die Einleitung von Biegelasten im Fehlerfall in das Niederdruckwellensystem minimiert und damit die Belastung des Niederdruckwellensystems während des Auftretens von Fehlerfällen deutlich reduziert ist. Dies wird dadurch erreicht, dass aufgrund der Verlagerung des vordersten Lagers in die Schwerpunktebene des Fans die auf das vorderste Lager wirkenden Kräfte nicht durch einen Hebel vergrößert werden.

Die erfindungsgemäße Lösung ist darüber hinaus mit dem Vorteil verbunden, dass durch Verlagerung des vordersten Lagers in axialer Richtung nach vorn in Richtung des Fans zwischen den beiden vorderen Lagern ein zusätzlicher Konstruktionsplatz oder Bauraum geschaffen wird, der zur Anordnung weiterer Komponenten in diesem Bereich des Flugtriebwerks genutzt werden kann. Diese Möglichkeit wird insbesondere dadurch erreicht, dass die beiden vorderen Lager im Vergleich zum Stand der Technik mit einem größeren axialen Abstand zueinander angeordnet sein können.

Damit das vorderste Lager der Niederdruckwelle in der gleichen Ebene angeordnet sein kann wie der Massenschwerpunkt des Fans, ist es erforderlich, dass in radialer Richtung ausreichend Bauraum zwischen der Niederdruckwelle und der Fannabe zur Verfügung steht. Dabei ist anzustreben, dass trotz Anordnung des vordersten Lagers in der gleichen Ebene wie der Massenschwerpunkt des Fans das Nabe-Spitze-Verhältnis des Fans nicht erhöht wird. Denn es besteht allgemein das Bestreben, das Nabe-Spitze-Verhältnis des Fans möglichst klein auszubilden, damit in einem Turbofan-Triebwerk ein möglichst großes Nabendruckverhältnis ("Hub-Pressure-Ratio") am Fan realisiert werden kann.

Zur Bereitstellung eines ausreichenden Bauraums für das vorderste Lager bei gleichzeitiger Realisierung eines kleinen Nabe-Spitze-Verhältnisses ist in einer Ausgestaltung der Erfindung vorgesehen, dass der Fan in BLISK-Bauweise ausgeführt ist (BLISK = "Blade Intergrated Disk"), d. h. als ein Bauteil, das einstückig ausgebildet ist und sowohl die Fanschaufeln als auch die Fanscheibe umfasst. Es liegt eine integrale Schaufel-Scheibe-Bauweise vor. Durch diese Bauweise werden ansonsten erforderliche gesonderte Schaufel-Scheibe-Verbindungen eingespart und auf diese Weise Bauraum in radialer Richtung gewonnen. Darüber hinaus wird durch die integrale Schaufel-Scheibe-Bauweise auch Gewicht eingespart. Gleiches gilt auch im Falle der Ausbildung des Fans in BLING-Bauweise (BLING = "Bladed Ring"). Bei dieser Bauweise werden ähnlich wie bei der BLISK-Bauweise die Schaufeln integral mit dem tragenden Ring hergestellt.

Grundsätzlich kann der Fan jedoch in beliebiger, auch in herkömmlicher Weise unter Realisierung von Schaufel-Scheibe-Verbindungen hergestellt sein.

Sowohl bei einer herkömmlichen Bauweise als auch bei einer BLISK- oder BLING-Bauweise kann zur Reduzierung oder weiteren Reduzierung des Bauraums vorgesehen sein, dass das vordere Lager mit einer geringeren radialen Bauhöhe realisiert ist, so dass es in dem durch den Innendurchmesser der Nabe in radialer Richtung begrenzten Bauraum ausgebildet sein kann. Hierzu kann beispielsweise vorgesehen sein, dass die Bauhöhe des Lagers in radialer Richtung kleiner ist als 40 % des Nabenradius des Fans.

Wie bereits angesprochen, ist es trotz der Anordnung des vordersten Lagers in der Ebene des Massenschwerpunkts des Fans anzustreben, dass das Nabe-Spitze-Verhältnis des Triebwerks klein ist. Dieses ist in Ausführungsvarianten kleiner als 0,35, insbesondere kleiner als 0,3.

Durch die Anordnung des vordersten Lagers in der Ebene des Massenschwerpunkts des Fans kann der Abstand zwischen den beiden vorderen Lagern der Niederdruckwelle gegenüber dem Stand der Technik vergrößert werden, beispielsweise um Konstruktionsraum für weitere Komponenten im Bereich zwischen den beiden vorderen Lagern zu schaffen. Hierbei ist in einer Ausgestaltung vorgesehen, dass der axiale Abstand zwischen dem ersten und dem zweiten vorderen Lager größer ist als der Nabenradius des Fans.

Ein weiterer Vorteil der Erfindung besteht darin, dass aufgrund der Minimierung der Einleitung von Biegelasten in das Niederdruckwellensystem durch Anordnung des vordersten Lagers in der Ebene des Schwerpunkts des Fans das axial dahinterliegende zweite vordere Lager deutlich schwächer und mit einem geringeren Gewicht ausgebildet sein kann als im Stand der Technik.

Das in der Ebene des Schwerpunkts des Fans angeordnete erste vordere Lager ist in einem Ausführungsbeispiel als Rollenlager ausgebildet. Ein solches nimmt radiale Kräfte, jedoch keine axialen Kräfte auf. Dabei kann vorgesehen sein, dass das zweite vordere Lager als Kugellager ausgebildet ist, beispielsweise als Rillenkugellager, das auch axiale Kräfte aufnimmt. Die axiale Lagerung wird somit durch das zweite vordere Lager bereitgestellt. In alternativen Ausgestaltungen sind jedoch auch abweichende Lagerkonfigurationen möglich. Beispielsweise kann alternativ vorgesehen sein, dass das erste vordere Lager, das sich in der Ebene des Massenschwerpunkts des Fans befindet, als Kugellager ausgebildet ist.

Die mindestens zwei vorderen Lager des Niederdruckwellensystems können in einer gemeinsamen Lagerkammer oder in getrennten Lagerkammern angeordnet sein. Die Lagerelemente der Lagerkammern werden dabei in an sich bekannter Weise mit Öl geschmiert, wobei zur Vermeidung eines Ölaustritts aus den Lagerkammern Lagerkammerdichtungen mit Sperrluft beaufschlagt sind.

Es wird darauf hingewiesen, dass der Fan erfindungsgemäß nicht über ein Untersetzungsgetriebe mit dem Niederdruckverdichter gekoppelt ist. Die Erfindung betrachtet solche Flugtriebwerke, bei denen die Niederdruckwelle den Fan ohne Untersetzung antreibt und eine durchgehende zentrale Welle des Flugtriebwerks bildet. Bei einem zweiwelligen Turbofan-Triebwerk ist die Niederdruckwelle von einer Hochdruckwelle umgeben, die eine Hochdruckturbine mit einem Hochdruckverdichter koppelt. Bei einem dreiwelligen Turbofan-Triebwerk ist darüber hinaus eine Mitteldruckwelle vorgesehen, die eine Mitteldruckturbine mit einem Mitteldruckverdichter des Flugtriebwerks koppelt.

Die Anordnung des vordersten Lagers der Niederdruckwelle "im Wesentlichen" in der Ebene des Massenschwerpunkts des Fans bedeutet, dass die axiale Position des Lagers in einem bestimmten Bereich realisiert sein kann. Dies ergibt sich bereits daraus, dass das Lager eine gewisse axiale Ausdehnung besitzt, während der Massenschwerpunkt mathematisch einen Punkt darstellt. Mit der Formulierung, dass das erste vordere Lager "im Wesentlichen" in derselben Ebene angeordnet ist wie der Massenschwerpunkt des Fans, sollen jedenfalls solche Anordnungen umfasst werden, bei denen das vorderste Lager derart angeordnet ist, dass mindestens ein Lagerelement des vordersten Lagers von der genannten Ebene geschnitten wird. Im Idealfall ist der Massenschwerpunkt des Lagers in der derselben senkrecht zur Längsachse des Flugtriebwerks verlaufende Ebene angeordnet wie der Massenschwerpunkt des Fans (d.h. die beiden Massenschwerpunkte fallen zusammen). Wie erläutert umfasst die Erfindung jedoch auch Abweichungen von einer solchen idealen Anordnung.

Darüber hinaus ist der Begriff "im Wesentlichen" im Sinne der Erfindung dahingehend zu verstehen, dass das vorderste Lager auch dann noch im Wesentlichen in derselben Ebene wie der Massenschwerpunkt des Fans angeordnet ist, solange mindestens ein Lagerelement des Lagers sich in dem Zylindervolumen befindet, das sich zwischen der Nabe des Fans und der Niederdruckwelle erstreckt, das also durch die axiale Länge der Fannabe definiert ist. Anschaulich gesprochen soll somit mindestens ein Lagerelement des ersten vorderen Lagers in dem Bauraum angeordnet sein, der radial außen durch die Nabe des Fans und radial innen durch die Niederdruckwelle begrenzt ist.

Die Erfindung wird nachfolgend unter Bezugnahme auf die Figuren der Zeichnung anhand eines Ausführungsbeispiels näher erläutert. Es zeigen:
- Figur 1: Komponenten eines Ausführungsbeispiels eines Turbofan-Triebwerks unter Darstellung eines Fans, einer Niederdruckwelle und zweier Lager zur Lagerung der Niederdruckwelle;
- Figur 2: das axial vordere Lager des Turbofan-Triebwerks der Figur 1 in einer vergrößerten Darstellung; und
- Figur 3: Komponenten eines Turbofan-Triebwerks mit zwei vorderen Lagern für eine Niederdruckwelle, die nicht gemäß der vorliegenden Erfindung angeordnet sind.

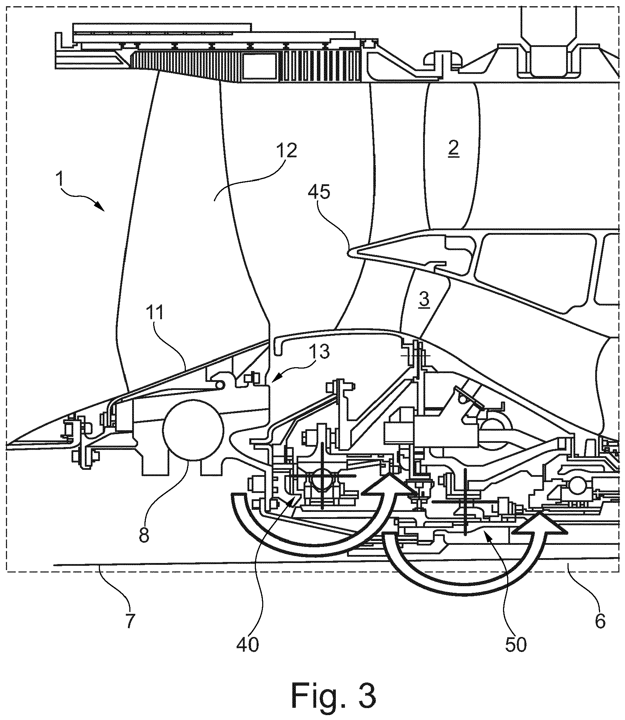

Zum besseren Verständnis der vorliegenden Erfindung wird zunächst anhand der Figur 3 ein Turbofan-Triebwerk erläutert, das ohne die erfindungsgemäße Lösung auskommt.

Der in der Figur 3 dargestellte Ausschnitt eines Turbofan-Triebwerks umfasst eine Fanstufe mit einem Fan 1, der eine Nabe 11 und Schaufeln 12 aufweist. Die Schaufeln 12 des Fans 1 sind dabei über Schaufel-Scheibe-Verbindungen 13 mit der Nabe 11 verbunden. Die von dem Fan 1 angesaugte Luftmasse wird zum einen in einen Nebenstromkanal 2 und zum anderen in einen Primärstromkanal 3 geleitet. Der Nebenstromkanal 2 und der Primärstromkanal 3 werden hinter dem Fan 1 durch einen Splitter 45 voneinander getrennt. Der Primärstromkanal 3 führt durch das Kerntriebwerk.

Das Turbofan-Triebwerk umfasst eine Niederdruckwelle 6, die eine Niederdruckturbine (nicht dargestellt) direkt und ohne Verwendung eines Untersetzungsgetriebes mit dem Fan 1 koppelt. Zur Lagerung der Niederdruckturbine 6 sind zwei Lager 40, 50 vorgesehen, die in axialer Richtung zueinander beabstandet sind.

Die beiden Lager 40, 50 im vorderen Bereich des Niederdruckwellensystems dienen dazu, Belastungskräfte aufzunehmen, die in einem Fehlerfall, beispielsweise bei Verlust oder Beschädigung einer oder mehrerer Schaufeln 12 des Fans 1 entstehen können. Die sich dann ergebene Unwucht führt zu enormen Kräften, die in das Wellensystem in Form von Biegung übertragen werden.

Die Figur 3 illustriert einen solchen Fehlerfall. Im Normalbetrieb liegt der Massenschwerpunkt 8 des Fans 1 auf der Achse 7 des Triebwerks. Im Fehlerfall, z. B. bei Verlust eines oder mehrerer Schaufeln 12, wandert der Massenschwerpunkt aus der Achse 7 heraus beispielsweise in die in der Figur 3 dargestellte Position. Die aufgrund der Verlagerung des Massenschwerpunkts 8 entstandene Unwucht führt zu Belastungskräften, die durch die beiden Lager 40, 50 aufgenommen werden müssen. Die Lager 40, 50 müssen dementsprechend derart ausgelegt sein, dass sie im Fehlerfall hohe Kräfte aufnehmen können. Die bedeutet, dass die Lager 40, 50 stark und mit hohen Bauteilgewichten und damit auch Bauteilkosten ausgeführt sein müssen. Auch kann im Fehlerfall das Problem auftreten, dass die belastete Niederdruckwelle 6 an anderen Bauteilen anstreift und dort zu kritischen Zuständen führt.

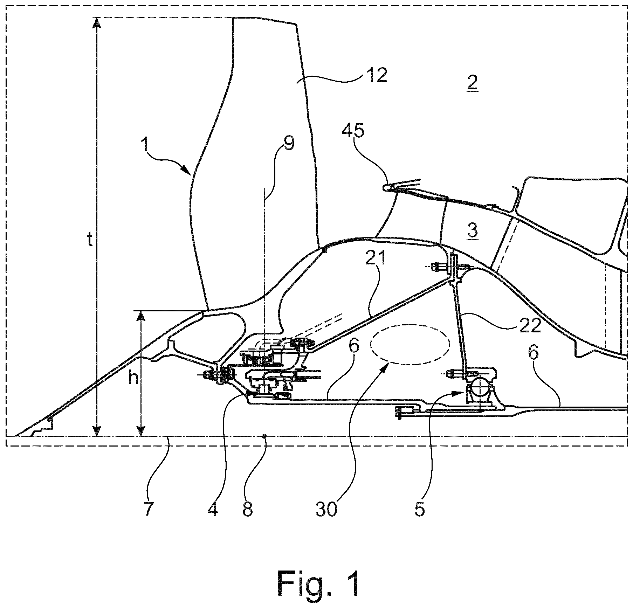

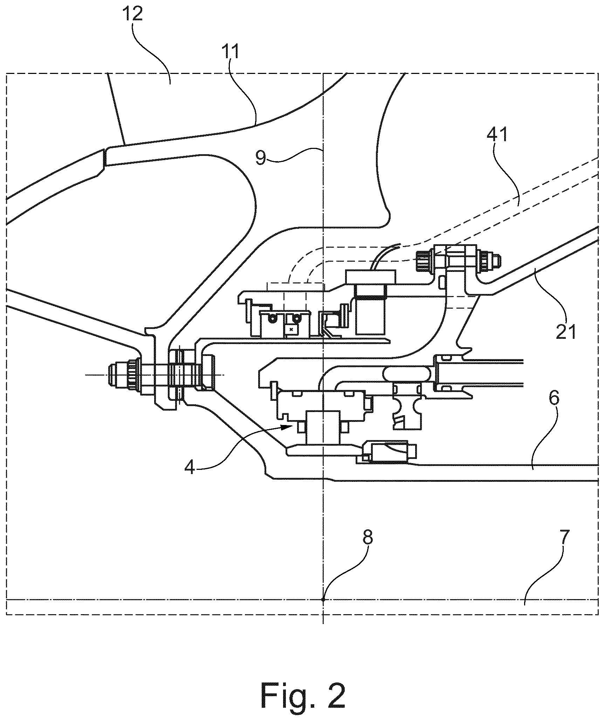

Die Figuren 1 und 2 zeigen ein erfindungsgemäßes Triebwerk, das eine verbesserte Lagerung der Niederdruckwelle 6 vorsieht.

Auch beim Triebwerk der Figur 1 sind ein erstes axial vorderes Lager 4 und ein zweites axial vorderes Lager 5 für die Niederdruckwelle 6 vorgesehen. Die beiden axial vorderen Lager 4, 5 werden nachfolgend auch als erstes vorderes Lager 4 und zweites vorderes Lager 5 bezeichnet.

Es ist vorgesehen, dass das erste axial vordere Lager 4, das das axial vorderste Lager darstellt, in der gleichen senkrecht zur Längsachse 7 des Flugtriebwerks verlaufenden Ebene 9 angeordnet ist, in der sich auch der Massenschwerpunkt 8 des Fans 1 befindet. Der Massenschwerpunkt ist dabei in der Figur 8 auf der Achse 7 angeordnet, d. h. es liegt kein Fehlerfall vor. In einem Fehlerfall wandert der Massenschwerpunkt 8 aus der Achse 7 heraus.

Dadurch, dass sich das Lager 4 in der axialen Ebene 9 des Massenschwerpunkts 8 befindet, wird eine Hebelwirkung, die bei nicht erfindungsgemäße Flugtriebwerken gemäß der Figur 3 durch den konstruktiven Abstand zwischen dem im Fehlerfall aus der Achse 7 heraus gewanderten Massenschwerpunkt zu den vorderen Lagern 4 und 5 entsteht, verhindert. Dadurch werden die im Fehlerfall in das Niederdruckwellensystem eingeleiteten Biegelasten minimiert und die Belastung des Niederdruckwellensystems im Fehlerfall deutlich reduziert.

Im Ausführungsbeispiel der Figur 1 ist das erste vordere Lager 4 beispielsweise als Rollenlager ausgebildet, so dass es allein radiale Kräfte aufnimmt. Das axial dazu versetzte zweite vordere Lager 5 ist beispielsweise als Kugellager ausgebildet, das zusätzlich axiale Kräfte aufnehmen kann. Durch Realisierung des ersten Lagers 4 als Rollenlager wird sicher verhindert, dass in einem Fehlerfall die Niederdruckachse 6 verkippen kann. Auch lässt sich ein Rollenlager mit einer vergleichsweisen geringen radialen Bauhöhe realisieren.

Das zweite vordere Lager 5 kann vergleichsweise schwach und mit leichteren Bauteilen realisiert sein, da die auf es im Fehlerfall wirkenden Kräfte durch die Verlagerung des ersten vorderen Lagers 4 in die Ebene 9 des Massenschwerpunkts 8 des Fans 1 im Vergleich zu Anordnungen gemäß der Figur 3 deutlich reduziert sind.

In der Figur 1 ist auch zu erkennen, dass aufgrund der Verlagerung des vorderen Lagers 4 in Richtung des Fans 1 ein freier Raum oder Gehäusebereich 30 zwischen Gehäusekomponenten 21, 22 des Treibwerks ausgebildet wird. Dieser neu geschaffene Gehäusebereich stellt einen zusätzlichen Konstruktionsplatz bereit, in dem weitere Triebwerkkomponenten angeordnet werden können. Dazu ist es vorteilhaft, den axialen Abstand zwischen dem ersten vorderen Lager 4 und dem zweiten vorderen Lager 5 möglichst groß zu wählen.

Im Ausführungsbeispiel der Figur 1 ist der Fan 1 in BLISK-Bauweise ausgebildet, d. h. der Fan besitzt eine integrale Schaufel-Scheibe-Bauweise. Dies hat u. a. den Vorteil, dass zusätzlicher Bauraum zur Anordnung des ersten vorderen Lagers 4 in der Ebene 9 des Massenschwerpunkts 8 bereitgestellt wird.

So bestehen im Wesentlichen drei Möglichkeiten, das erste vordere Lager 4 zwischen Niederdruckwelle 6 und Fannabe 11 anzuordnen. Eine erste Möglichkeit besteht darin, den Innendurchmesser der Nabe 11 zu erhöhen. Dies ist zwar grundsätzlich möglich, führt jedoch in nachteiliger Weise dazu, dass das Nabe-Spitze-Verhältnis h/t sich vergrößert. Das Nabe-Spitze-Verhältnis h/t ist in der Figur 1 illustriert. Der Wert h gibt den radialen Abstand zwischen der Achse 7 und der Nabe 11 an (z.B. an der Schaufelvorderkante - Einlass-Nabe-Spitze-Verhältnis ("inlet h/t")). Der Wert t gibt den radialen Abstand zwischen der Achse 7 und der Spitze der Schaufeln 12 des Fans 1 an. Allgemein besteht das Bestreben, ein möglichst kleines Nabe-Spitze-Verhältnis h/t zu realisieren, da ein solches ein großes Nabendruckverhältnis am Fan ermöglicht.

Das Ausführungsbeispiel der Figur 1 realisiert daher eine zweite Möglichkeit, das erste vordere Lager 4 in der Ebene 9 des Massenschwerpunkts 8 des Fans 1 und dabei zwischen Niederdruckwelle 6 und Fannabe 11 anzuordnen. Gemäß dieser Variante wird der Innendurchmesser des Fans 1 im Bereich der Nabe 11 erhöht, indem die Verbindung zwischen Nabe 11 und Schaufeln 12 kompakter und ohne baulich aufwändige Schaufel-Scheibe-Verbindungen realisiert ist. Hierzu ist der Fan in BLISK-Bauweise oder in BLING-Bauweise ausgeführt. Bei Verwendung eines Fans 1 in BLISK- oder BLING-Bauweise ist es sogar möglich, dass das Nabe-Spitze-Verhältnis im Vergleich zu Fans mit Schaufel-Scheibe-Verbindungen reduziert wird, obwohl das erste vordere Lager 4 unter der Nabe 11 in der Ebene des Massenschwerpunkts 8 des Fans angeordnet ist.

Eine dritte Möglichkeit zur Erhöhung des Bauraums, die zusätzlich zu der Realisierung des Fans 1 in BLISK- oder BLING-Bauweise vorgenommen werden kann, besteht darin, das erste vordere Lager 4 mit einer möglichst geringen Bauhöhe in radialer Richtung zu versehen. Hierzu ist im Ausführungsbeispiel der Figur 1 das erste vordere Lager 4 als Rollenlager ausgeführt, das mit einer geringeren Bauhöhe realisiert werden kann als ein Kugellager.

Grundsätzlich ist es jedoch ebenfalls möglich, beispielsweise das erste vordere Lager 4 als Kugellager und das zweite vordere Lager 5 als Rollenlager auszubilden.

Die Figur 2 zeigt eine vergrößerte Ansicht des ersten vorderen Lagers 4 des Triebwerks der Figur 1. Darin sind die rotierenden Komponenten grau hinterlegt. Es ist erkennbar, dass das Rollenlager 4 in der Ebene 9 verläuft, die sich senkrecht zur Längsachse 7 des Flugtriebwerks erstreckt und in der der Massenschwerpunkt 8 des Fans angeordnet ist.

Bei dem in der Figur 2 dargestellten Ausführungsbeispiel verhält es sich dabei sogar so, dass der Massenschwerpunkt des Rollenlagers 4 in der Ebene 9 angeordnet ist. Die Prinzipien der vorliegenden Erfindung sind jedoch ebenfalls realisiert, wenn mindestens ein Lagerelement des vorderen Lager 4 an irgendeiner Stelle von der Ebene 9 geschnitten wird, also nicht notwendigerweise der Massenschwerpunkt des Lagers 4 in der Ebene 9 liegt.

In der Figur 2 sind weitere typische Elemente eines Lagers einer Niederdruckwelle 6 eines Flugtriebwerks dargestellt, wie beispielsweise eine Zuleitung 41 für Sperrluft zur Abdichtung von Lagerkammerdichtungen einer Lagerkammer. Auf diese dem Fachmann an sich bekannten Komponenten wird nicht weiter eingegangen, da sie für die vorliegende Erfindung nicht wesentlich sind.

Die Erfindung beschränkt sich in ihrer Ausgestaltung nicht auf die vorstehend dargestellten Ausführungsbeispiele, die lediglich beispielhaft zu verstehen sind. Insbesondere sind der Aufbau der Lager 4, 5 sowie Aufbau und Design des Fans 1 lediglich beispielhaft zu verstehen. Auch wird darauf hingewiesen, dass die Erfindung nicht nur bei einem Turbofan-Triebwerk, sondern auch bei jedem anderen Triebwerk mit einem eingangsseitigen Fan realisiert werden kann.

## Patentansprüche

1. Flugtriebwerk, das aufweist:
- einen Fan (1), der einen Massenschwerpunkt (8) aufweist,
- eine Niederdruckwelle (6), die den Fan (1) unmittelbar und damit ohne Untersetzung mit einer Niederdruckturbine des Flugtriebwerks koppelt, und
- eine Lageranordnung zum Lagern der Niederdruckwelle (6), wobei die Lageranordnung mindestens zwei vordere Lager (4, 5) zur Lagerung der Niederdruckwelle (6) aufweist, ein erstes vorderes Lager (4) und ein zweites vorderes Lager (5), wobei das erste vordere Lager (4) in axialer Richtung vor dem zweiten vorderen Lager (5) angeordnet ist,
**dadurch gekennzeichnet,**
**dass** das erste vordere Lager (4) in dem Sinne in derselben senkrecht zur Längsachse (7) des Flugtriebwerks verlaufenden Ebene (9) angeordnet ist wie der Massenschwerpunkt (8) des Fans (1), dass mindestens ein Lagerelement des ersten vorderen Lagers (4) von der genannten Ebene (9) geschnitten wird.

2. Flugtriebwerk nach Anspruch 1, **dadurch gekennzeichnet, dass** der Fan (1) in BLISK-Bauweise oder in BLING-Bauweise ausgeführt ist.

3. Flugtriebwerk nach Anspruch 1 oder 2, **dadurch gekennzeichnet, dass** das erste vordere Lager (4) eine geringe radiale Bauhöhe aufweist.

4. Flugtriebwerk nach Anspruch 3, **dadurch gekennzeichnet, dass** die radiale Bauhöhe des Lagers kleiner ist als 40% des Nabenradius des Fans (1).

5. Flugtriebwerk nach einem der vorangehenden Ansprüche, **dadurch gekennzeichnet, dass** das Nabe-Spitze-Verhältnis des Fans (1) kleiner als 0,35, insbesondere kleiner als 0,3 ist.

6. Flugtriebwerk nach einem der vorangehenden Ansprüche, **dadurch gekennzeichnet, dass** der axiale Abstand zwischen dem ersten vorderen Lager (4) und dem zweiten vorderen Lager (5) mindestens gleich dem Nabenradius des Fans (1) ist.

7. Flugtriebwerk nach einem der vorangehenden Ansprüche, **dadurch gekennzeichnet, dass** das zweite vordere Lager (5) schwächer ausgebildet ist als das erste vordere Lager (4).

8. Flugtriebwerk nach einem der vorangehenden Ansprüche, **dadurch gekennzeichnet, dass** das erste vordere Lager (4) als Rollenlager ausgebildet ist.

9. Flugtriebwerk nach Anspruch 8, **dadurch gekennzeichnet, dass** das zweite vordere Lager (5) als Kugellager ausgebildet ist.

10. Flugtriebwerk nach einem der Ansprüche 1 bis 7, **dadurch gekennzeichnet, dass** das erste vordere Lager (4) als Kugellager ausgebildet ist.

11. Flugtriebwerk nach einem der vorangehenden Ansprüche, **dadurch gekennzeichnet, dass** die mindestens zwei vorderen Lager (4, 5) in einer gemeinsamen Lagerkammern oder in getrennten Lagerkammern angeordnet sind.

12. Flugtriebwerk nach einem der vorangehenden Ansprüche, **dadurch gekennzeichnet, dass** der Massenschwerpunkt des ersten vorderen Lagers (4) in derselben senkrecht zur Längsachse (7) des Flugtriebwerks verlaufende Ebene (9) angeordnet ist wie der Massenschwerpunkt (8) des Fans (1).

13. Flugtriebwerk nach einem der vorangehenden Ansprüche, **dadurch gekennzeichnet, dass** das Triebwerk ein Turbofan-Triebwerk ist.

## Claims

1. Aircraft engine provided with:
- a fan (1) having a center of mass (8),
- a low-pressure shaft (6) that couples the fan (1) directly and hence without gear reduction to a low-pressure turbine of the aircraft engine, and
- a bearing arrangement for mounting the low-pressure shaft (6), where the bearing arrangement has at least two front bearings (4, 5) for mounting the low-pressure shaft (6), a first front bearing (4) and a second front bearing (5), with the first front bearing (4) being arranged in the axial direction upstream of the second front bearing (5),
**characterized in that**
the first front bearing (4) is arranged in this sense in the same plane (9), extending perpendicular to the longitudinal axis (7) of the aircraft engine, as the center of mass (8) of the fan (1), such that at least one bearing element of the first front bearing (4) is intersected by said plane (9).

2. Aircraft engine in accordance with Claim 1, **characterized in that** the fan (1) is provided in BLISK or BLING design.

3. Aircraft engine in accordance with Claim 1 or 2, **characterized in that** the first front bearing (4) has a low radial overall height.

4. Aircraft engine in accordance with Claim 3, **characterized in that** the radial overall height of the bearing is less than 40 % of the hub radius of the fan (1).

5. Aircraft engine in accordance with one of the preceding Claims, **characterized in that** the hub/ tip ratio of the fan (1) is smaller than 0.35, in particular smaller than 0.3.

6. Aircraft engine in accordance with one of the preceding Claims, **characterized in that** the axial distance between the first front bearing (4) and the second front bearing (5) is at least equal to the hub radius of the fan (1).

7. Aircraft engine in accordance with one of the preceding Claims, **characterized in that** the second front bearing (5) is designed weaker than the first front bearing (4).

8. Aircraft engine in accordance with one of the preceding Claims, **characterized in that** the first front bearing (4) is designed as a roller bearing.

9. Aircraft engine in accordance with Claim 8, **characterized in that** the second front bearing (5) is designed as a ball bearing.

10. Aircraft engine in accordance with one of the Claims 1 to 7, **characterized in that** the first front bearing (4) is designed as a ball bearing.

11. Aircraft engine in accordance with one of the preceding Claims, **characterized in that** the at least two front bearings (4, 5) are arranged in a common bearing chamber or in separate bearing chambers.

12. Aircraft engine in accordance with one of the preceding Claims, **characterized in that** the center of mass of the first front bearing (4) is arranged in the same plane (9), extending perpendicular to the longitudinal axis (7) of the aircraft engine, as the center of mass (8) of the fan (1).

13. Aircraft engine in accordance with one of the preceding Claims, **characterized in that** the engine is a turbofan engine.

## Revendications

1. Moteur d'avion qui comprend:
- une soufflante (1) présentant un centre de masse (8),
- un arbre basse pression (6) qui accouple directement et donc sans démultiplication la soufflante (1) à une turbine basse pression du moteur d'avion, et
- un système de palier pour loger l'arbre basse pression (6), sachant que le système de palier présente au moins deux paliers avant (4, 5) pour loger l'arbre basse pression (6), un premier palier avant (4) et un deuxième palier avant (5), sachant que le premier palier avant (4) est disposé en amont du second palier avant (5) dans le sens axial,
**caractérisé en ce que**
le premier palier avant (4) est disposé dans ce sens dans le même plan (9) s'étendant perpendiculairement à l'axe longitudinal (7) du moteur d'avion que le centre de masse (8) de la soufflante (1) dans la mesure où au moins un élément du premier palier avant (4) est coupé par ledit plan (9).

2. Moteur d'avion selon la revendication n° 1, **caractérisé en ce que** la soufflante (1) est réalisée selon une conception BLISK ou BLING.

3. Moteur d'avion selon la revendication n° 1 ou n° 2, **caractérisé en ce que** le premier palier avant (4) présente une faible hauteur radiale de construction.

4. Moteur d'avion selon la revendication n° 3, **caractérisé en ce que** la hauteur radiale de construction du palier est inférieure à 40 % du rayon du moyeu de la soufflante (1).

5. Moteur d'avion selon une des revendications précédentes, **caractérisé en ce que** le rapport moyeu-pointe de la soufflante (1) est inférieur à 0,35, notamment inférieur à 0,3.

6. Moteur d'avion selon une des revendications précédentes, **caractérisé en ce que** l'écart axial entre le premier palier avant (4) et le second palier avant (5) est au moins égal au rayon du moyeu de la soufflante (1).

7. Moteur d'avion selon une des revendications précédentes, **caractérisé en ce que** le second palier avant (5) présente une conception plus faible que le premier palier avant (4).

8. Moteur d'avion selon une des revendications précédentes, **caractérisé en ce que** le premier palier avant (4) est conçu sous forme de palier à rouleaux.

9. Moteur d'avion selon la revendication n° 8, **caractérisé en ce que** le deuxième palier avant (5) est conçu sous forme de palier à billes.

10. Moteur d'avion selon une des revendications n° 1 à n° 7, **caractérisé en ce que** le premier palier avant (4) est conçu sous forme de palier à billes.

11. Moteur d'avion selon une des revendications précédentes, **caractérisé en ce que** lesdits au moins deux paliers avant (4, 5) sont disposés dans une chambre de palier commune ou dans des chambres de palier séparées.

12. Moteur d'avion selon une des revendications précédentes, **caractérisé en ce que** le centre de masse du premier palier avant (4) est disposé dans le même plan (9) s'étendant perpendiculairement à l'axe longitudinal (7) du moteur d'avion que le centre de masse (8) de la soufflante (1).

13. Moteur d'avion selon une des revendications précédentes, **caractérisé en ce que** le moteur est un turboréacteur à soufflante.
